# EUROPEAN PATENT SPECIFICATION

(11) **EP 4 201 812 B1**
(45) Date of publication and mention of the grant of the patent: **14.10.2026**
(21) Application number: 23157637.2
(22) Date of filing: 21.02.2018
(51) Int. Cl.: B64C 39/02

(54) **A FLIGHT SYSTEM**
FLUGSYSTEM
SYSTÈME DE VOL

(30) Priority: 22.02.2017 GB 201702852
(43) Date of publication of application: 28.06.2023
(62) Document number(s) of the earlier application(s) in accordance with Art. 76 EPC: 18708178.1 / 3 585 685
(73) Proprietor: Gravity Industries Ltd., Salisbury Wiltshire SP2 8PU (GB)
(72) Inventor: BROWNING, Richard, Salisbury SP2 8PU (GB)
(74) Representative: Boult Wade Tennant LLP

(56) References cited:
- WO-A2-2011/002517
- US-A1- 2009 020 654
- US-A1- 2014 196 650
- US-A1- 2015 064 004
- US-B2- 8 894 015

## Description

The invention relates to an apparatus for enabling an individual to fly. In particular, the invention relates to the provision of propulsion assemblies that can be held in a user's hands and/or worn on a user's forearms and provide thrust to lift the user from the ground.

There have been many attempts in the past to enable individuals to fly with only minimal equipment. Typically, such systems are formed of a framework that rigidly connects one or more propulsion units with each other or with a wing.

US2014196650A1 describes a Motorized Water Vehicle (MWV) adapted to operate as a fluid-compression station in addition to the primary transport function thereof. Such an MWV can supply compressed fluid to a third device. In a preferred and non-exhaustive manner, such an MWV can supply a passenger propulsion device allowing the propulsion device to move through the air or through a fluid. A propulsion system is thereby provided, in which a remote station is a motorized water vehicle adapted to engage with a propulsion device.

US2009020654A1 describes a harness with mounted engine frame comprising a harness to be worn by a user. An engine support arm is mounted on the harness and a pair of lateral arms extend from the engine support arm. At least one engine is associated with each lateral arm. A connector attaches directly or indirectly to the harness for receiving the engine support arm, so that the engine support arm is movable relative to the harness in response to engine output and other flight conditions.

WO2011/002517A2 describes a personal flight system designed to be worn on the back of a pilot.

The inventors have realised that it is possible to configure a flight system that can use the strength of the human body, rather than a rigid frame work, to provide stable flight for an individual.

Accordingly, there is provided a wearable flight system according to claim 1.

By propulsion assembly is meant a device that produces thrust. A propulsion assembly comprises one or more propulsion units that each provide thrust (for example, in a known direction) and may collectively define the thrust that is produced by the propulsion assembly. The thrust provided by a propulsion assembly produces an equal and opposite force on the user. Preferably, each propulsion assembly is able to provide a maximum thrust of at least 400N and preferably at least 500N. Each propulsion assembly may be controllable to produce a lower thrust than the maximum based on control signals. The propulsion assemblies may comprise turbines or ducted fans.

By "wearable" is meant that propulsion assemblies of the flight system (those parts that provide thrust) may be mounted on the human body such that the "wearer" contributes at least in part to the relative motion of those propulsion assemblies. That is, it is recognised that the difficult control problem of correctly angling a variety of thrusts produced by a plurality of propulsion assemblies may be delegated to the wearer's natural senses of balance, proprioception, and kinaesthesia.

The claimed invention includes a flight system comprising two propulsion assemblies that are configured to be held in the hands and/or otherwise mounted on the wearer's forearms.

In such a system, net thrust is directed substantially in line with the user's respective forearm and away from the elbow so that the induced stress is generally aligned with the bones of the wearer's forearm and is directed outwardly. Here, reference is made to net thrust rather than all thrust. There may be multiple propulsion units that individually produce thrust that is not aligned with the wearer's arm, but collectively for each propulsion unit the net thrust (the resolution of the generated forces) will be so aligned.

A suitably physically conditioned wearer is able to support his/her own weight using just his/her arms, but for longer usage, it is preferable to share some of the load with other parts of the wearer's skeleton or musculature. Therefore, the flight system further comprises a body propulsion assembly arranged for engaging the wearer's torso to substantially prevent relative movement between the body propulsion assembly and the wearer's torso. In addition, one or more leg propulsion assemblies (either one for both legs or one for each leg) can be provided. The leg propulsion assemblies may be arranged for engaging one or both of the wearer's legs to substantially prevent relative movement between the leg propulsion assemblies and the wearer's corresponding leg(s).

In most preferred embodiments, however, half or the majority of the load is carried by the left-hand and right-hand propulsion assemblies collectively. In other words, the maximum thrust capability of the left-hand and right-hand propulsion assemblies together is preferably equal to or greater than the maximum thrust capability of the other propulsion assemblies combined.

In fact, it has been found that providing a thrust roughly equal between each of: the left-hand propulsion assembly; the right-hand propulsion assembly; and, collectively, the other propulsion assemblies, provides even more preferred stability (i.e., tripod-like balance between each arm and the body). Therefore, the maximum thrust capability of the left-hand and right-hand propulsion assemblies together are preferably equal and the maximum thrust capability of each of the left-hand and right-hand propulsion assemblies is preferably equal to or greater than the maximum thrust capability of the other propulsion assemblies combined.

Lift is produced by the combined vertical resolution of the forces generated by all of the propulsion assemblies. Whilst not essential, it is preferred for reasons of control and stability that the thrust generated by the left-hand and right-hand propulsion assemblies is equal. In order to control horizontal motion, the wearer can use his/her arms to direct the left-hand and right-hand propulsion assemblies to produce a net thrust that includes a horizontal component.

The body propulsion assembly may be inclined relative to the torso of the wearer (by virtue of the arrangement of a support through which it engages the wearer) so as to provide a small net forward force on the wearer, i.e. the thrust is directed rearwardly to produce a net force on the wearer in a forward direction perpendicular to a line extending between the centre of the user's head and the centre of the user's waist. In other words, with the wearer supported in an upright position, the body propulsion assembly may provide a net forward force. That forward force may be counteracted by the wearer inclining his/her arms in front of his/her torso to provide an equal net thrust in the opposite direction. Thus, the assemblies are arranged such that collectively they can produce equilibrium (a net vertical thrust equal to the load of the wearer and flight system, with a zero net horizontal thrust) when in a splayed (i.e. divergent) arrangement. Of course, this also has the advantage that the exhaust of the propulsion assemblies is directed away from the wearer's body.

The body propulsion assembly is preferably arranged vertically at the same height as the left-hand and right-hand propulsion assemblies when in the splayed arrangement that produces equilibrium. It has been found that the preferred location on the body of the wearer is therefore in the region of the wearer's waist (that is, the thrust is generated near the wearer's waist). Preferably, the outlet of the thrust is no higher than the user's lumbar vertebrae and no lower than the user's thighs. Most preferably, the outlet of the thrust is aligned with the user's lumbar vertebrae.

Among other advantages, in the case that turbines or fans are used to provide thrust, this ensures that the air take in by one propulsion assembly is not fed by the outlet of another propulsion assembly.

In optional embodiments, a fuel tank supplies fuel to the propulsion assemblies (for example, the fuel may supply turbines forming the propulsion units). Since the user is flying based on feel, it is important that the experience remains constant over time so that the user does not need to greatly re-calibrate his or her actions as the fuel is used up. Accordingly, the thrust provided by one or more or all of the propulsion assemblies can be automatically varied as a function of the stored fuel. That is the fuel use (or the remaining stored fuel) may be monitored, and the thrust provided by the propulsion assemblies may be used to compensate for the reduction in weight of the fuel load. Fuel use/remaining fuel may be measured directly, or inferred either by the use of one or more propulsion units.

Since the fuel store may be carried on the user's back, it is most preferable in that case that the thrust of a body propulsion assembly (since this will be located most closely to the fuel store) is varied as a function of the stored fuel. Preferably, the thrust of the body propulsion assembly is automatically reduced to compensate for the reducing load of the fuel store as fuel is used.

In preferred embodiments, the propulsion assemblies configured to be worn on a user's hand or forearm may comprise at least two hand propulsion units in a splayed arrangement that produce thrusts that diverge such that their net thrust is substantially aligned with the wearer's arm. This has been found to add to the stability of the overall system.

The flight system of the invention may be provided with or without one or more wings. However, the features set out below make it unnecessary to use a wing and it is preferred that one is not possible.

For a better understanding of the invention, and to show how the same may be put into effect, reference will now be made, by way of example only, to the accompanying drawings in which:
Figures 1a to 1c show a first propulsion assembly for use in an embodiment of the invention;
Figures 2a to 2c show a second propulsion assembly for use in an embodiment of the invention;
Figures 3a to 3e show a first embodiment of a flight system in accordance with the invention;

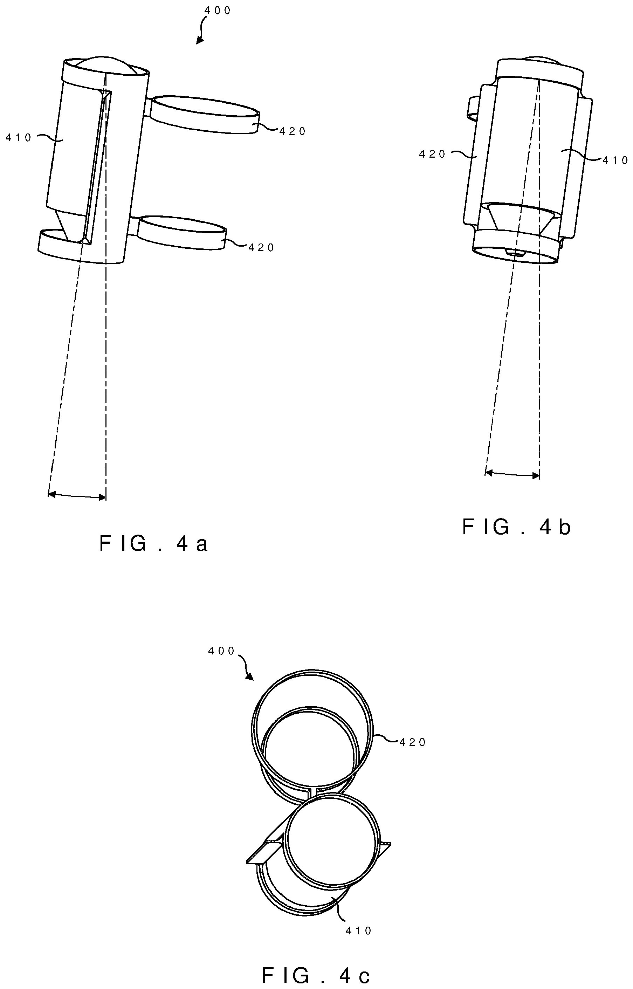

Figures 4a to 4c show a third propulsion assembly for use in an embodiment of the invention;
Figures 5a to 5d show an example of a flight system which does not fall within the scope of the appended claims; and
Figures 6a to 6d show a second embodiment of a flight system in accordance with the invention.

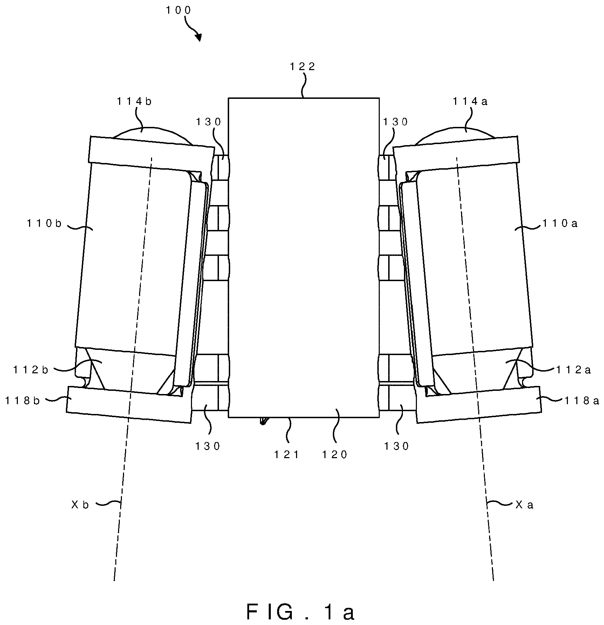

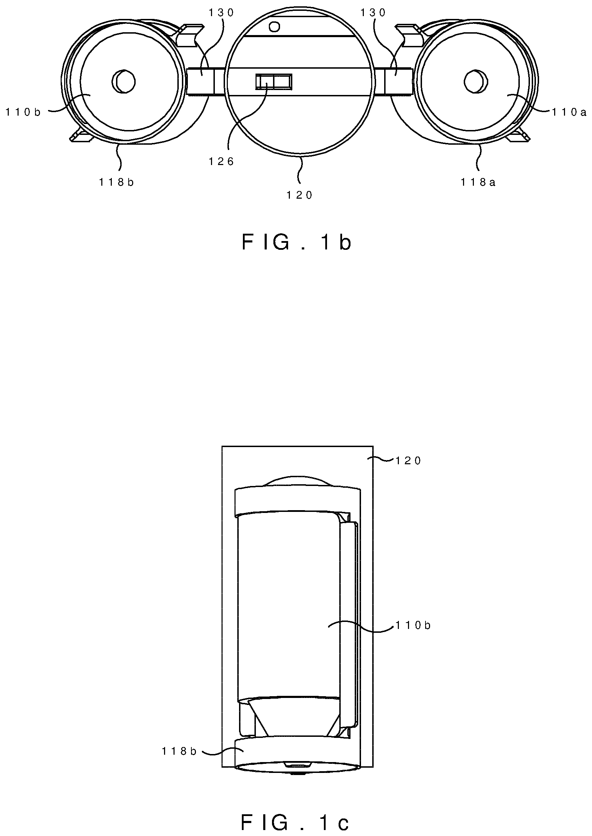

A first embodiment of a propulsion assembly 100 for applying thrust directly to a user's arm is shown in Figures 1a to 1c. Of course, it is intended that a flight system in accordance with the invention will have one propulsion assembly 100 for each arm.

With reference to Figure 1a, a propulsion assembly 100 comprises: one or more propulsion units 110; a sleeve 120; and one or more mountings 118.

In the depicted embodiment there are two propulsion units 110, a first propulsion unit 110a, and a second propulsion unit 110b. For the/each propulsion unit 110a, 110b, there is a mounting 118a, 118b via which the respective propulsion unit 110a, 110b may be mounted to the sleeve 120.

The sleeve 120 of the propulsion assembly 100 is configured to be worn on a user's hand and/or forearm. It is preferable that the sleeve 120 extends over a length of from 20cm to 50cm, and more preferably a length of from 30cm to 35cm, so that the propulsion assembly 100 is held in alignment with the user's arm, but does not hinder articulation of the elbow. The sleeve 120 defines a longitudinal axis, a distal end 121 and a proximal end 122. When the propulsion assembly 100 is worn, the distal end 121 is distal with respect to the user's body (e.g. nearer the user's hand) and the proximal end 122 is proximal with respect to the user's body (e.g. nearer the user's elbow). The sleeve 120 may have a diameter in the range 8cm to 10cm.

Preferably, the sleeve 120 is padded on the inside. The padding may be shaped to the general contour of an arm so as to distribute support comfortably.

Irrespective of the number of propulsion units 110, the propulsion assembly 100 as a whole is arranged to provide a net thrust along an axis that generally corresponds with the user's forearm when the propulsion assembly 100 is worn. That is, the propulsion assembly 100 as a whole is arranged to provide a net thrust along the longitudinal axis of the sleeve 120.

Preferably, the first and second propulsion units 110a, 110b are angled apart so as to produce thrust along non-parallel vectors. For example, the mountings 118a and 118b may include connecting members 130 that space the propulsion units 110a, 110b from the sleeve 120 by a greater amount at the distal end 121 than at the proximal end 122.

The first propulsion unit 110a is arranged to provide net force along a first axis Xa defining a first propulsion vector. The second propulsion unit 110b is arranged to provide net force along a second axis Xb defining a second propulsion vector.

It has been found that the divergence of thrust can provide beneficial stability. Preferably, therefore, the first propulsion vector is at least an angle of 5° relative to the second propulsion vector and more preferably at least an angle of 10°. Furthermore, it is preferable that the first propulsion vector is no more than an angle of 30° relative to the second propulsion vector and more preferably no more than 25°. By remaining within this range, the loss of thrust due to divergence can be balanced against the improved stability.

As best shown in Figure 1c, within the sleeve 120 there is provided a handle 124 for the user to grasp. The handle 124 may have mounted thereon controls 126. The controls 126 face the distal end 121 of the sleeve 120. In this way, when a portion of the user's weight is applied to the handle for support, the user's fingers will be free to manipulate the controls 126. Most preferably, the handle 124 is ergonomically-shaped so as to distribute the user's weight over as large an area of the user's hand as possible. As a result, a left-hand propulsion assembly 100 may have a left-handed grip 124, while a right-hand propulsion assembly 100 may have a right-handed grip 124. One or both of the left-hand grip 124 and right-hand grip 124 will have controls 126 mounted thereon.

As in this embodiment, when first and second propulsion units 110a, 110b are provided, the handle is preferably positioned such that it is aligned with a line extending between the first and second propulsion units 110a, 110b. This defines the position of the first and second propulsion units 110a, 110b relative to the user's closed fist, and has been found to be particularly stable.

The inventors have realised that the position of the handle 124 relative to the outlet(s) of the propulsion unit(s) 110 of the propulsion assembly 100 can influence stability. It is preferred that the handle 124 is spaced beyond the outlet(s) of the propulsion assembly 100 (e.g. the outlets of the first and second propulsion units 110a, 110b) by a distance in the range 20mm to 100mm, preferably by 30mm to 60mm, most preferably by 40mm.

That is to say that the handle 124 may be spaced by this distance beyond the outlets in a direction corresponding to the axis of the net thrust

Put another way, the handle 124 may be spaced by this distance beyond the outlets in a direction corresponding to the longitudinal axis of the sleeve 120 if provided.

The handle 124 may be spaced by this distance beyond the outlets in a direction corresponding to the axis that generally corresponds with the user's forearm when the propulsion assembly 100 is worn.

The controls 126 preferably comprise two input devices. The first of the input devices provides a variable signal and can be used to control an amount of thrust produced by a propulsion assembly 100 (or a set of propulsion assemblies 100). The second of the input devices provides a binary output and can be used to deactivate one or more or (preferably) all of the propulsion assemblies 100 of the flight system when released. It is not essential that both left-hand and right-hand propulsion assemblies 100 include the second input device, though this may be preferred. The second of the input devices is preferably a "kill switch". That is, it must remain depressed by the user in order to prevent deactivation of the propulsion assemblies 100.

Preferably, the controls 126 are mounted on the handle so as to align with the thumb and forefinger of the user. The first input device is therefore preferably in the form of a trigger aligned with the user's index finger (when the handle is held in the user's hand). The second input device is preferably aligned with the user's thumb (when the handle is held in the user's hand) so that it can be continually held down during use of the flight system to prevent deactivation.

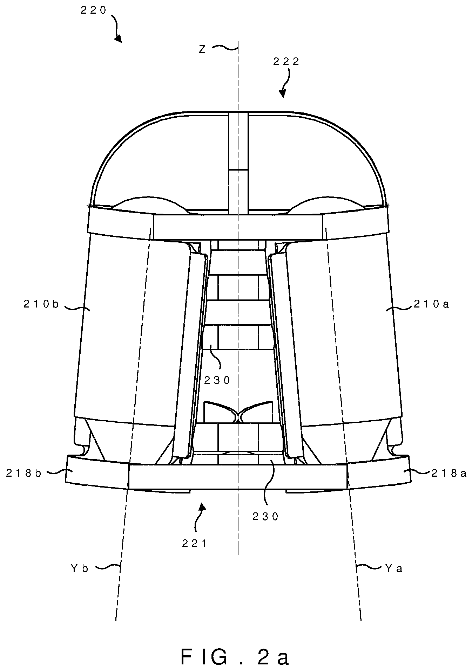

A first embodiment of a propulsion assembly 200 for a user's torso is shown in Figures 2a to 2c. A flight system in accordance with the claimed invention has one such propulsion assembly 200.

Body propulsion assembly 200 is configured to apply thrust directly to a user's torso and comprises at least one body propulsion unit 210 and a support 220.

The support 220 is arranged to support a user's waist or torso. For example, it may comprise a seat, harness, belt, jacket, and/or other item of clothing for securing the at least one body propulsion unit 210 to a user's body. Preferably, the at least one body propulsion unit 210 is supported on the dorsal side of the user's body

The support is configured to be worn on a user's back or waist, but in either case it is preferable that the support is sized and shaped such that the location at which thrust is generated by the at least one body propulsion unit(s) 210 (i.e. the nozzle of the body propulsion unit(s) 210 when these are turbines and/or the fan of a fan driven by a motor) is located between the lower edge of the rib cage and knees, and more preferably between the upper extent of the lumbar vertebrae and the user's upper thigh.

Most preferably, the support is sized and shaped such that the location at which thrust is generated by the at least one body propulsion unit(s) 210 (i.e. the nozzle of the body propulsion unit(s) 210 when these are turbines and/or the fan of a fan driven by a motor) is aligned with the lumbar vertebrae.

The support 220 is arranged to hold the at least one body propulsion unit 210 at a fixed angle relative to the user's torso when the body propulsion assembly 200 is worn by (i.e. engages) the user. The support 220 defines an axis Z, which is parallel with a line extending between the centre of the user's head and the centre of the user's waist when the support is worn.

The support 220 holds the at least one body propulsion unit 210 at an angle to the axis Z. That angle has an elevation component, the body propulsion elevation angle W. That is, the body propulsion elevation angle W is the angle in the sagittal plane (the plane that divides the user into left and right sides) between the net thrust produced by the body propulsion assembly 200 and the axis Z.

In other words, the support 220 is configured to hold a user's body relative to the at least one body propulsion unit 210 such that a line extending between the centre of the user's head and the centre of the user's waist extends relative to the orientation of the net thrust provided by the body propulsion assembly 200 by the body propulsion elevation angle W.

The body propulsion elevation angle W is greater than zero. Preferably, the body propulsion elevation angle W is at least 10° and more preferably at least 12°. Even more preferably, the body propulsion elevation angle W is no more than 30° degrees and more preferably no more than 18°.

This choice of angle has been found to improve stability and protect the user's legs without greatly reducing total lift.

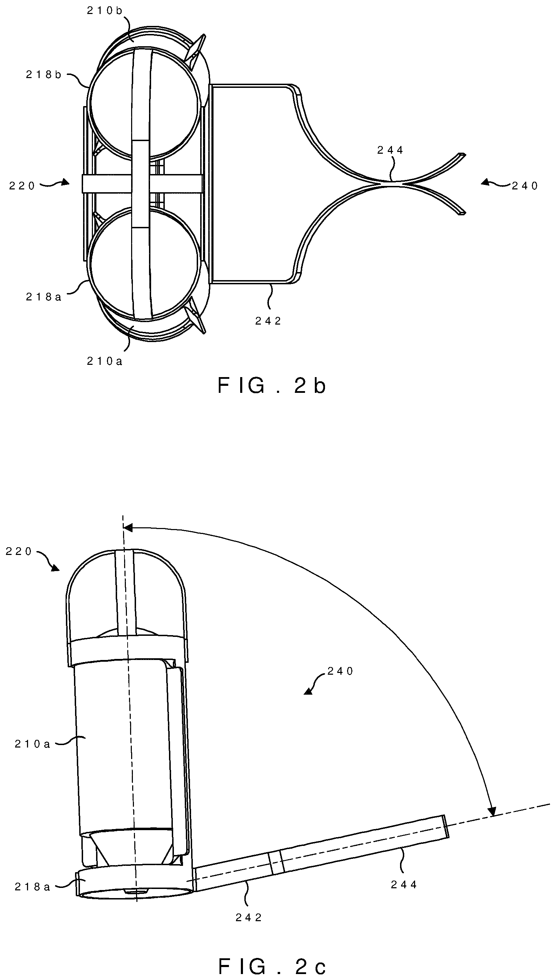

As can be best seen in Figures 2b and 2c, one optionally way of maintaining the body propulsion elevation angle W relative to the user's legs is by providing the support with leg braces 240 for engaging the user's upper thighs. A preferable leg brace 240 may comprise a section 244 arranged to extend between the user's legs so that the legs may grip the leg brace 240. The leg brace 240 may also have a wider section 242 on which a user may sit.

Although a single body propulsion unit is sufficient, the body propulsion assembly 200 preferably includes at least a first body propulsion unit 210a and a second body propulsion unit 210b. The first body propulsion unit 210a is arranged to provide net force along a first axis Ya defining a first propulsion vector. The second body propulsion unit 210b is arranged to provide net force along a second axis Yb defining a second propulsion vector. The first propulsion vector is not parallel with the second propulsion vector. Preferably, the first and second propulsion vectors are directed apart by an angle of at least 5° and preferably at least 20°. Even more preferably, the first and second body propulsion vectors are directed apart by an angle of no more than 30°.

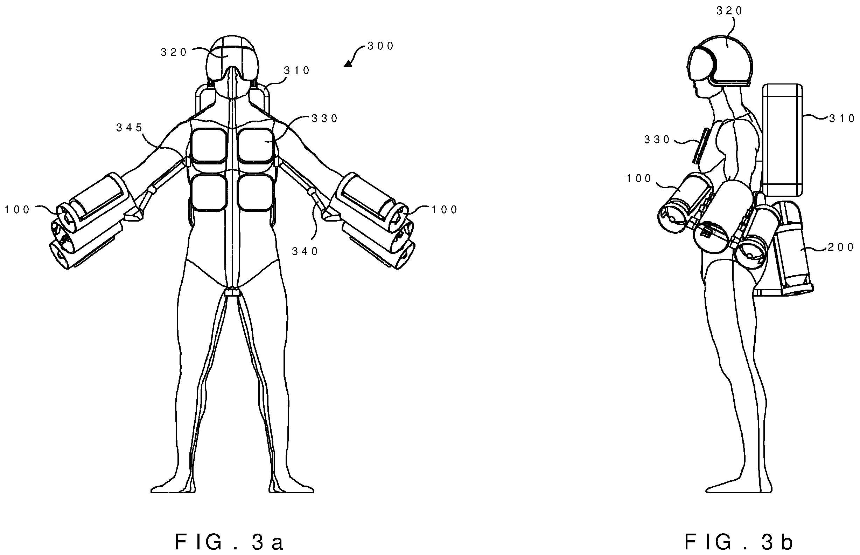

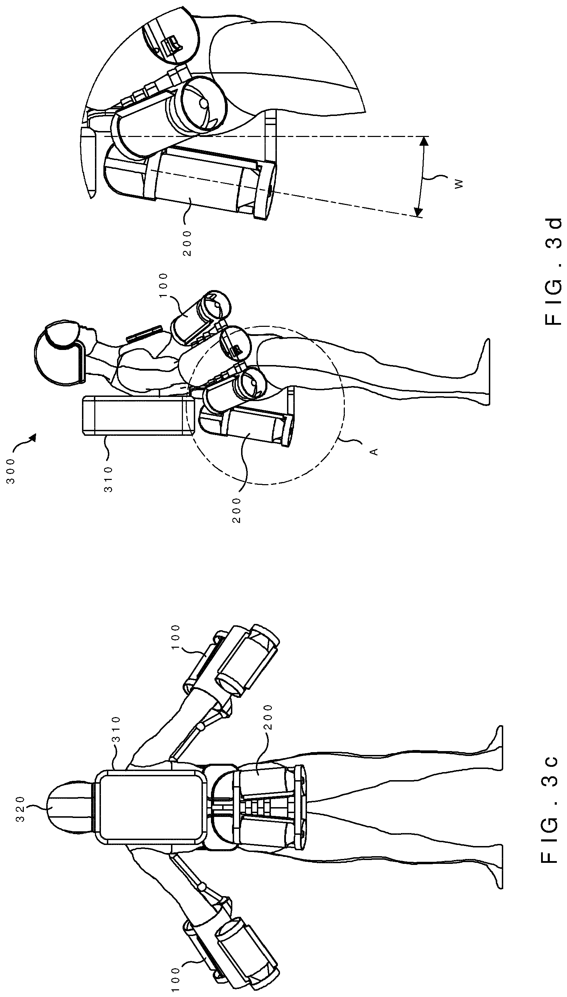

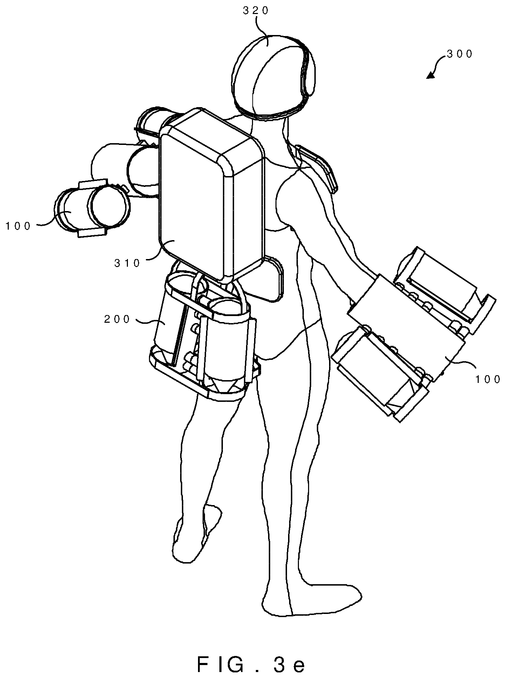

A first embodiment of a flight system is shown in Figures 3a to 3e, in which it can be seen that the system comprises a left-hand propulsion assembly 100 (of the type discussed above with reference to Figures 1a to 1c); a right-hand propulsion assembly 100 (of the type discussed above with reference to Figures 1a to 1c); a body propulsion assembly 200 (of the type discussed above with reference to Figures 2a to 2c).

Preferably, each propulsion assembly 100, 200 is able to provide a maximum thrust in the range 400N to 500N.

Figures 3a to 3e show the preferred embodiment in which two propulsion units 110 are provided for each of the left-hand and right-hand propulsion assemblies 100. Also preferred is the provision of two propulsion units210 for the body propulsion assembly 200. That is, a combination of six propulsion units 110, 210, with two for each arm and two for the user's torso. Also shown is the above-described preferred rearward orientation of the propulsion units 210 of the body propulsion assembly 200 when the user assumes an upright standing posture.

As discussed above, the support 220 of the body propulsion assembly 200 is sized and shaped to hold the body propulsion units210 so that thrust is produced at a height between the lower edge of the rib cage and knees, and most preferably level with the lumbar vertebrae.

The flight system 300 also comprises an energy storage device 310 for providing power to the propulsion assemblies. This may comprise a fuel storage vessel for supplying fuel to turbines and/or batteries for powering fans and/or control circuitry. The energy storage device 310 is preferably provided in the form of a back-pack to be worn above a lower-back-mounted or waist-mounted body propulsion assembly 200, or which may have one or more propulsion units attached thereto (for example, one either side of a central fuel storage vessel).

Since the flight system 300 is preferably provided without a wing (i.e. it may be solely dependent upon the propulsion assemblies to provide lift), it is beneficial to minimise interruptions in the thrust provided by any one propulsion unit 110, 210, 410. One source of interruptions, in the case in which the propulsion assemblies comprise turbines, is the possibility of a bubble in the fuel line. This can potentially cause a momentary loss of thrust or even shut down the engine. It is preferable that when the energy storage device 310 comprises a fuel storage vessel, the vessel is provided as a variable volume storage (for example, a bladder or a cylinder closed by a piston) rather than a fixed volume chamber. In this way, no air will be present in the fuel storage vessel. 25. Preferable embodiments will comprise a bubble sensor for sensing the presence of bubbles in fuel supply lines for supplying fuel to turbines. The bubble sensor is for alerting the user to the presence of bubbles. In some embodiments, the bubble sensor may provide a bubble signal representative of an amount of bubbles (volume or number, etc.) in the fuel line. When the bubble signal exceeds a threshold, the user is alerted and may land, e.g. before the turbines fail. The alert may be audible or visual (for example using the head-up display described below).

A control system 330 is provided. This may be embodied in a single device to be worn on the user's chest, or may be formed with distributed devices. The control system 330 is arranged to provide control signals to each propulsion assembly 100, 200. The control system 330 may also be arranged to receive control signals from each propulsion assembly 100, 200 and/or from the energy storage device 310.

Whilst the control system 330 may independently control the left-hand and right-hand propulsion assemblies 100, it is preferred that they each provide the same thrust.

Thus, in preferred embodiments the control signals may include: a first throttle signal generated by controls 126 of one of the left-hand and right-hand propulsion assemblies 100, and a second throttle signal generated by controls 126 of the other of the left-hand and right-hand propulsion assemblies 100. The control system 330 uses the first throttle signal to command the left-hand and right-hand propulsion assemblies 100 to each provide a corresponding first thrust. The control system 330 uses the second throttle signal to command the body propulsion assembly 200 to provide a second corresponding thrust.

As discussed above, the controls 126 may be embodied as one or two input devices the left-hand and right-hand propulsion assemblies 100. In each case, one of the input devices provides a variable signal in the form of the throttle signal. The other of the input devices (if provided) may be a "kill switch", which provides a binary output and is monitored by the control system 330 so as to deactivate one or more or (preferably) all of the propulsion assemblies 100 of the flight system when released.

The flight system preferably includes a helmet 320 which comprises a head-up display in communication with the control system 330. Preferably, the head-up display represents the amount of energy remaining in the energy storage device 310 (e.g., a volume of fuel remaining in the bladder) and/or the thrust of each of the propulsion assemblies 100, 200 (for example, the rotational speeds of the turbines).

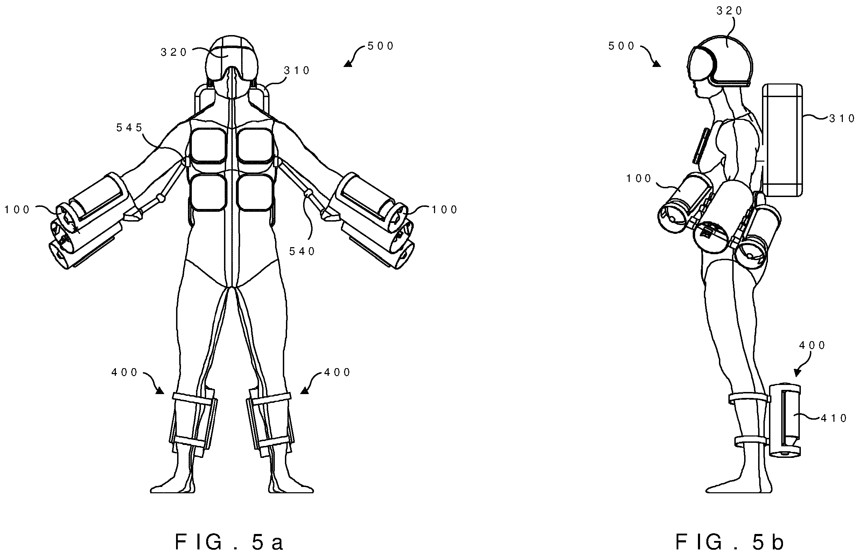

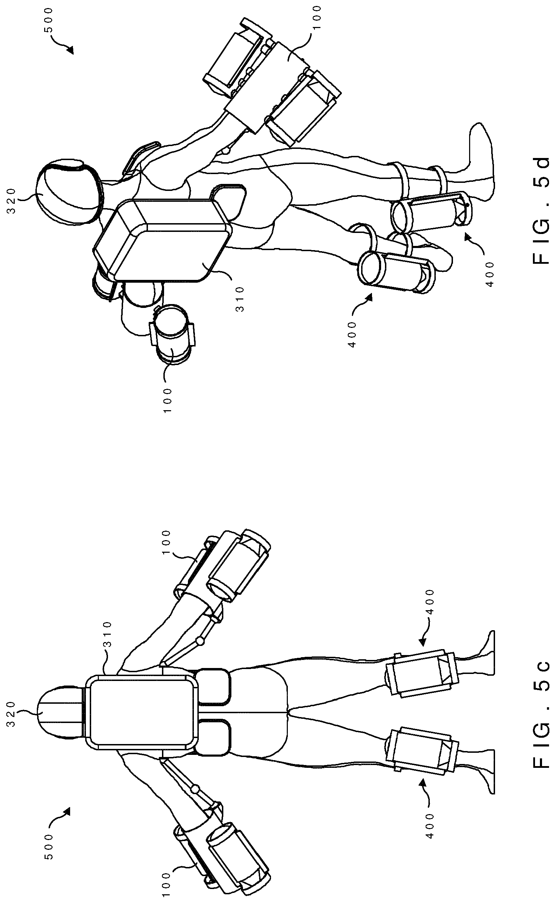

Whereas, the flight system 300 of the first embodiment has been shown with a left-hand propulsion assembly 100, a right-hand propulsion assembly 100, and a body propulsion assembly 200, embodiments are envisaged in which the body propulsion assembly 200 is supplemented with a leg propulsion assembly 400 (either one for both legs, or one for each leg), and examples not falling within the scope of the appended claims are envisaged in which the body propulsion assembly 200 is replaced by (as in the flight system 500 of Figures 5a to 5d) a leg propulsion assembly 400 (either one for both legs, or one for each leg).

A leg propulsion assembly 400 comprises: at least one leg propulsion unit 410; and a support 420. The support 420 is preferably sized and shaped to be worn on a user's calf such that the at least one leg propulsion assembly 410 is on the dorsal side of the calf. The support 420 may comprise bindings for surrounding the user's leg such that the bindings define a longitudinal axis aligned with the bones of the lower leg.

It is preferred to have a single leg propulsion unit 410. The support 420 is preferably sized and shaped to be worn on a user's calf such that the leg propulsion unit 410 is at an angle V to the longitudinal axis of the support 420 (i.e. is not aligned with the bones of the lower leg). Preferably, angle V is such that when worn, there is a small force applied inwardly to press the user's legs towards one another. This provides divergence of thrust when a pair of leg propulsion assemblies 400 are worn and has been found to improve stability. The support 420 is preferably arranged such that the leg propulsion unit 410 is at an angle to the longitudinal axis of the support 420 of at least 3°. More preferably, the support 420 is preferably arranged such that the leg propulsion unit 410 is at an angle to the longitudinal axis of the support 420 of no more than 20°. In this way, the leg propulsion units 410 at that angle to the user's leg when worn.

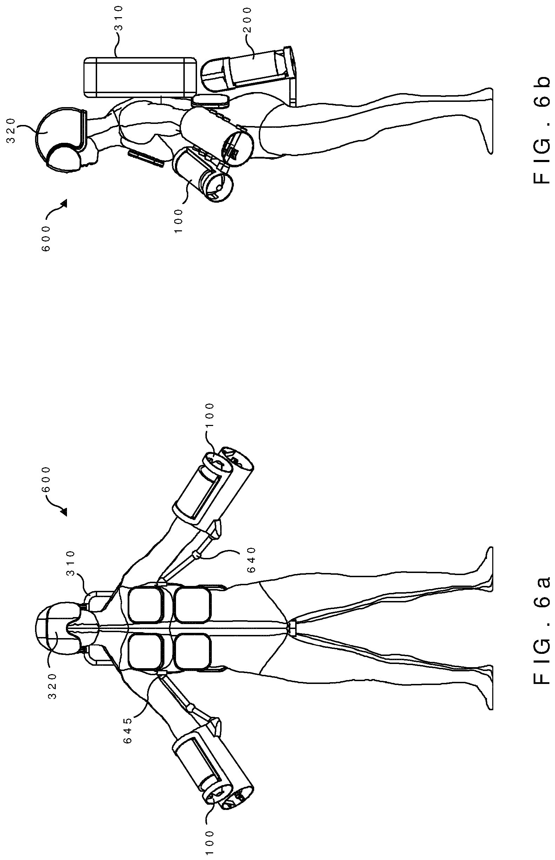

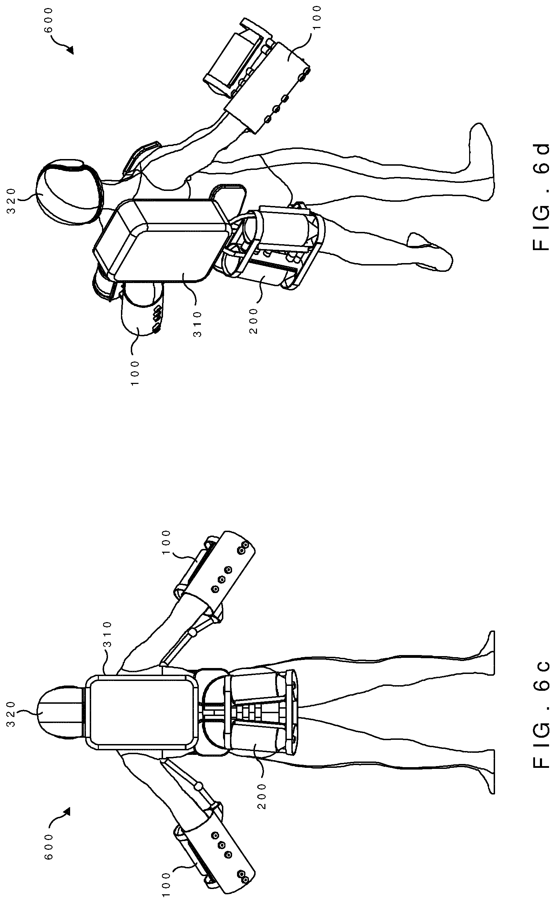

In the embodiments discussed above the left-hand and right-hand propulsion assemblies 100 each included two propulsion units 110. Whilst that is preferred, more may be provided, and in fact only one is required. Thus, there is envisaged an embodiment of a flight system 600 such as that shown in Figures 6a to 6d, in which each of the left-hand and right-hand propulsion assemblies 100 each included a single propulsion unit 110.

As can be seen from the Figures, in each embodiment of a flight system 300, 500, 600, the left-hand and right-hand propulsion assemblies are each connected to the body propulsion assembly via an articulated frame 340, 540, 640. This is merely optional, and in practice, a suitably trained individual can use the systems without such a frame.

However, a frame 340, 540, 640 is useful for less trained individuals to restrict the relative movement of the left-hand and right-hand propulsion assemblies 100. By providing a set of joints to articulate the frame 340, 540, 640, predetermined degrees of freedom may be provided. This can ensure that the left-hand and right-hand propulsion assemblies 100 will always be oriented in an appropriate direction (for example, the frame 340, 540, 640 can prevent an arm behind positioned behind the user's back).

The frame 340, 540, 640 would comprise composite materials and/or titanium. It may have a hinge under each armpit for allowing adduction or abduction of the arms, a rotational joint between the shoulder and elbow for allowing circumduction of the upper arm, a hinge on the elbow for allowing the arm to bend, another rotational joint between the elbow and wrist for allowing circumduction of the hand. Merely restricting the motion of the user in this way will help to support the load.

However, it may be preferable to use a control system having one or more gyros and/or accelerometers for controlling the frame 340, 540, 640 and the thrust applied by the propulsion assemblies 100, 200, 400. In which case, actuators 345, 545, 645 may be provided for actuating the articulated frame. The actuators 345, 545, 645, may be servos as drawn, or linear actuators (such as pneumatic or hydraulic actuators).

The actuators 345, 545, 645 may be controlled by the control system 330 to provide a force towards a position of stability (where horizontal components of the thrust are balanced) based upon signals from one or more gyros and/or accelerometers forming part of the system. As an example, this may be carried out using a PID controller to control the angles of the net thrust vectors produced by each propulsion assembly 100, 200, 400 so as to provide a predetermined net horizontal thrust (for example zero or a small positive thrust).

Each propulsion unit 110, 210, 410 produces thrust in a predetermined direction. As is known in the art, this may be achieved by accelerating air and/or combustion products in a longitudinal direction of the propulsion unit 110, 210, 410.

For example, each propulsion unit 110, 210, 410 may be a gas turbine. For example, a suitable turbine would be a JetCat turbine available from JetCat Germany, which is typically used in model aircraft or military drones.

Alternatively, a ducted fan driven by an electric motor may be used as a propulsion unit 110, 210, 410. If it is required that the system may fly for an extended period, it is possible that the power supply could be connected via a long cable and so need not be carried, thereby reducing the load for the fans.

Whilst the divergent propulsion units of each propulsion assembly are preferably individual turbines (or ducted fans), it is envisaged that the divergent thrusts may be achieved using a single turbine having two or more exhaust nozzles that themselves diverge by the preferable stabilising angles.

Furthermore, whilst wings are not needed for the flight system to fly, these may additionally be provided. For example, a suit forming part of the flight system may comprise a membrane extending between the arms and the side of the body, or a membrane extending between the legs. Alternatively (or additionally) a rigid wing shaped to provide lift may be worn on the user's back.

## Claims

1. A wearable flight system (300) comprising a plurality of propulsion assemblies (100, 200) including:
a left-hand propulsion assembly (100), comprising one or more propulsion units (110) configured to produce thrust, configured to be worn on a user's left hand and/or forearm; and
a right-hand propulsion assembly (100), comprising one or more propulsion units (110) configured to produce thrust, configured to be worn on a user's right hand and/or forearm; **characterized in that** the system further includes a body propulsion assembly (200) configured to apply thrust directly to a user's torso comprising at least one body propulsion unit (210) configured to produce thrust and a support (220) for supporting the user's waist or torso.

2. The system (300) of claim 1, wherein each of the left-hand and right-hand propulsion assemblies (100) are arranged to be worn such that in use net thrust is directed substantially in line with the user's respective forearm and away from the elbow.

3. The system (300) of claim 1, wherein the support (220) of the body propulsion assembly (200) is configured to hold the user's body such that a line extending between the centre of the user's head and the centre of the user's waist extends relative to the orientation of the net force provided by the body propulsion assembly (200) in use by a body propulsion elevation angle, the body propulsion elevation angle being greater than zero.

4. The system (300) of claim 3, wherein the body propulsion elevation angle is:
at least 10°; and/or
no more than 30°.

5. The system of claim 3 or 4, wherein the support (220) is configured to be worn on a user's back or waist and the support (220) is connected to the body propulsion assembly (200) such that the body propulsion assembly (200) is located below the user's waist.

6. The system (300) of any preceding claim, wherein the left-hand and right-hand propulsion assemblies (100) collectively are arranged to provide maximum thrust in excess of the maximum thrust of the body propulsion assembly (200).

7. The system (300) of any preceding claim, wherein the left-hand and right-hand assemblies (100) each comprise means (110) for providing a first thrust along an axis defining a first hand propulsion vector (Xa) and a second thrust along an axis defining a second hand propulsion vector (Xb), wherein the first hand propulsion vector (Xa) is not parallel with the second hand propulsion vector (Xb).

8. The system (300) of any preceding claim, wherein the body propulsion assembly (200) comprises means (210) for providing a first thrust along an axis defining a first body propulsion vector (Ya) and a second thrust along an axis defining a second body propulsion vector (Yb), wherein the first body propulsion vector (Ya) is not parallel with the second body propulsion vector(Yb).

9. The system (300) of any preceding claim, wherein:
The body propulsion assembly (200) comprises at least two body propulsion units (210a, 210b);
a first body propulsion unit (210a) is arranged to provide net force along an axis defining a first body propulsion vector (Ya);
a second body propulsion unit (210b) of the body propulsion assembly (200) arranged to provide net force along an axis defining a second body propulsion vector (Yb); and
the first body propulsion vector (Ya) is not parallel with the second body propulsion vector (Yb).

10. The system (300) of claim 8 or 9, wherein the first and second body propulsion vectors (Ya, Yb) are directed apart by an angle:
of at least 10°; and/or
of no more than 30°.

11. The system (300) of any preceding claim, wherein the propulsion assemblies (100, 200) comprise turbines and/or ducted electric fans.

12. The system (300) of any preceding claim, wherein:
the left-hand and right-hand propulsion assemblies (100) are arranged to provide a maximum combined thrust of at least 800N and/or
the body propulsion assembly (200) is arranged to provide a maximum thrust of at least 400N.

13. The system (300) of any preceding claim, further comprising an inflatable bladder (310) for storing fuel in communication with at least one of the propulsion assemblies (100, 210) via a fuel supply line.

14. The system (300) of claim 13, further comprising a bubble sensor for sensing the presence of bubbles in the fuel supply line for alerting the user to the presence of bubbles.

15. The system (300) of any preceding claim, wherein the left-hand and right-hand propulsion assemblies (100) are freely movable relative to each other.

## Patentansprüche

1. Tragbares Flugsystem (300), das eine Vielzahl von Antriebsanordnungen (100, 200) umfasst, die Folgendes einschließen:
eine linksseitige Antriebsanordnung (100), die eine oder mehrere Antriebseinheiten (110) umfasst, die so konfiguriert sind, dass sie Schub erzeugen und so konfiguriert sind, dass sie an einer linken Hand und/oder einem Unterarm des Benutzers getragen werden können; und
eine rechtsseitige Antriebsanordnung (100), die eine oder mehrere Antriebseinheiten (110) umfasst, die so konfiguriert sind, dass sie Schub erzeugen und so konfiguriert sind, dass sie an einer rechten Hand und/oder Unterarm des Benutzers getragen werden können; **dadurch gekennzeichnet, dass** das System weiter Folgendes einschließt:
eine Körper-Antriebsanordnung (200), die so konfiguriert ist, dass sie Schub direkt auf einen Oberkörper des Benutzers anwendet und mindestens eine Körper Antriebseinheit (210) umfasst, die so konfiguriert ist, dass sie Schub erzeugt, und eine Stütze (220) zum Stützen der Taille oder des Oberkörpers des Benutzers.

2. System (300) nach Anspruch 1, wobei jede der linksseitigen und rechtsseitigen Antriebsanordnung (100) so angeordnet ist, dass sie derart getragen wird, dass in Verwendung Nettoschub im Wesentlichen in Linie mit dem jeweiligen Unterarm des Benutzers und vom Ellenbogen weg geleitet wird.

3. System (300) nach Anspruch 1, wobei die Stütze (220) der Körper-Antriebsanordnung (200) so konfiguriert ist, dass sie den Körper des Benutzers derart hält, dass eine Linie, die sich zwischen der Mitte des Kopfs des Benutzers und der Mitte der Taille des Benutzers erstreckt, in Bezug auf die Ausrichtung der Nettokraft erstreckt, die in Verwendung von der Körper-Antriebsanordnung (200) durch einen Körperantriebs-Anstellwinkel bereitgestellt wird, wobei der Körperantriebs-Anstellwinkel größer als Null ist.

4. System (300) nach Anspruch 3, wobei der Körperantriebs-Anstellwinkel:
mindestens 10° beträgt; und/oder
nicht mehr als 30° beträgt.

5. System nach Anspruch 3 oder 4, wobei die Stütze (220) so konfiguriert ist, dass sie auf einem Rücken oder an einer Taille des Benutzers getragen werden kann, und wobei die Stütze (220) mit der Körper-Antriebsanordnung (200) derart verbunden ist, dass die Körper-Antriebsanordnung (200) unter der Taille des Benutzers gelegen ist.

6. System (300) nach einem vorstehenden Anspruch, wobei die linksseitige und rechtsseitige Antriebsanordnungen (100) gemeinsam so angeordnet sind, dass sie maximalen Schub über den maximalen Schub der Körper-Antriebsanordnung (200) hinaus bereitstellen.

7. System (300) nach einem vorstehenden Anspruch, wobei die linksseitige und rechtsseitige Anordnung (100) jeweils Mittel (110) umfassen zum Bereitstellen eines ersten Schubs entlang einer Achse, die einen ersten Hand-Antriebsvektor (Xa) definiert, und eines zweiten Schubs entlang einer Achse, die einen zweiten Hand-Antriebsvektor (Xb) definiert, wobei der erste Hand-Antriebsvektor (Xa) nicht parallel zum zweiten Hand-Antriebsvektor (Xb) ist.

8. System (300) nach einem vorstehenden Anspruch, wobei die Körper-Antriebsanordnung (200) Mittel (210) umfasst zum Bereitstellen eines ersten Schubs entlang einer Achse, die einen ersten Körper-Antriebsvektor (Ya) definiert, und eines zweiten Schubs entlang einer Achse, die einen zweiten Körper-Antriebsvektor (Yb) definiert, wobei der erste Körper-Antriebsvektor (Ya) nicht parallel zum zweiten Körper-Antriebsvektor(Yb) ist.

9. System (300) nach einem vorstehenden Anspruch, wobei:
die Körper-Antriebsanordnung (200) mindestens zwei Körper Antriebseinheiten (210a, 210b) umfasst;
eine erste Körper Antriebseinheit (210a) so angeordnet ist, dass sie Nettokraft entlang einer Achse bereitstellt, die einen ersten Körper-Antriebsvektor (Ya) definiert;
eine zweite Körper Antriebseinheit (210b) der Körper-Antriebsanordnung (200) so angeordnet ist, dass sie Nettokraft entlang einer Achse bereitstellt, die einen zweiten Körper-Antriebsvektor (Yb) definiert; und
der erste Körper-Antriebsvektor (Ya) nicht parallel zum zweiten Körper-Antriebsvektor (Yb) ist.

10. System (300) nach Anspruch 8 oder 9, wobei der erste und zweite Körper-Antriebsvektor (Ya, Yb) durch einen Winkel weggeleitet werden, der:
mindestens 10° beträgt; und/oder
nicht mehr als 30° beträgt.

11. System (300) nach einem vorstehenden Anspruch, wobei die Antriebsanordnungen (100, 200) Turbinen und/oder kanalgeführte Elektrogebläse umfassen.

12. System (300) nach einem vorstehenden Anspruch, wobei:
die linksseitige und rechtsseitige Antriebsanordnung (100) so angeordnet sind, dass sie einen maximalen kombinierten Schub von mindestens 800N bereitstellen und/oder
die Körper-Antriebsanordnung (200) so angeordnet ist, dass sie einen maximalen Schub von mindestens 400N bereitstellt.

13. System (300) nach einem vorstehenden Anspruch, weiter umfassend eine aufblasbare Blase (310) zum Speichern von Kraftstoff in Kommunikation mit mindestens einer der Antriebsanordnungen (100, 210) über eine Kraftstoffzufuhrleitung.

14. System (300) nach Anspruch 13, weiter umfassend einen Blasensensor zum Erfassen der Anwesenheit von Blasen in der Kraftstoffzufuhrleitung, um den Benutzer bei Anwesenheit von Blasen zu warnen.

15. System (300) nach einem vorstehenden Anspruch, wobei die linksseitige und rechtsseitige Antriebsanordnung (100) in Bezug aufeinander frei bewegbar sind.

## Revendications

1. Système vol pouvant être porté sur soi (300) comprenant une pluralité d'ensembles de propulsion (100, 200) incluant :
un ensemble de propulsion à gauche (100) comprenant une ou plusieurs unités de propulsion (110) configuré pour produire une poussée, configurées pour être porté sur la main gauche et/ou l'avant-bras gauche de l'utilisateur ; et
un ensemble de propulsion à droite (100) comprenant une ou plusieurs unités de propulsion (110) configurées pour produire une poussée, configuré pour être porté sur la main droite et/ou l'avant-bras droit de l'utilisateur ; **caractérisé en ce que** le système inclut en outre :
un ensemble de propulsion de corps (200) configuré pour appliquer une poussée directement sur le torse d'un utilisateur comprenant au moins une unité de propulsion de corps (210) configurée pour produire une poussée et un support (220) pour supporter la taille ou le torse de l'utilisateur.

2. Système (300) selon la revendication 1, dans lequel les ensembles de propulsion à gauche et à droite (100) sont agencés pour être portés de telle sorte que, lors de l'utilisation, une poussée nette soit dirigée sensiblement en ligne avec l'avant-bras respectif de l'utilisateur et à distance du coude.

3. Système (300) selon la revendication 1, dans lequel le support (220) de l'ensemble de propulsion de corps (200) est configuré pour tenir le corps de l'utilisateur de telle sorte qu'une ligne s'étendant entre le centre de la tête de l'utilisateur et le centre de la taille de l'utilisateur s'étende par rapport à l'orientation de la force nette fournie par l'ensemble de propulsion de corps (200) lors de l'utilisation d'un angle d'élévation de propulsion de corps, l'angle d'élévation de propulsion de corps étant supérieur à zéro.

4. Système (300) selon la revendication 3, dans lequel l'angle d'élévation de propulsion de corps est :
au moins 10° ; et/ou
inférieur ou égal à 30°.

5. Système selon la revendication 3 ou 4, dans lequel le support (220) est configuré pour être porté sur le dos ou à la taille de l'utilisateur et le support (220) est connecté à l'ensemble de propulsion de corps (200) de telle sorte que l'ensemble de propulsion de corps (200) soit situé en dessous de la taille de l'utilisateur.

6. Système (300) selon une quelconque revendication précédente, dans lequel les ensembles de propulsion à gauche et à droite (100) sont collectivement agencés pour fournir une poussée maximale au-dessus de la poussée maximale de l'ensemble de propulsion de corps (200).

7. Système (300) selon une quelconque revendication précédente, dans lequel les ensembles à gauche et à droite (100) comprennent chacun des moyens (110) pour fournir une première poussée le long d'un axe définissant un premier vecteur de propulsion de main (Xa) et une seconde poussée le long d'un axe définissant un second vecteur de propulsion de main (Xb), dans lequel le premier vecteur de propulsion de main (Xa) n'est pas parallèle au second vecteur de propulsion de main (Xb).

8. Système (300) selon une quelconque revendication précédente, dans lequel les ensembles de propulsion de corps (200) comprennent des moyens (210) pour fournir une première poussée le long d'un axe définissant un premier vecteur de propulsion de corps (Ya) et une seconde poussée le long d'un axe définissant un second vecteur de propulsion de corps (Yb), dans lequel le premier vecteur de propulsion de corps (Ya) n'est pas parallèle au second vecteur de propulsion de corps (Yb).

9. Système (300) selon une quelconque revendication précédente, dans lequel :
l'ensemble de propulsion de corps (200) comprend au moins deux unités de propulsion de corps (210a, 210b) ;
une première unité de propulsion de corps (210a) est agencée pour fournir une force nette le long d'un axe définissant un premier vecteur de propulsion de corps (Ya) ;
une seconde unité de propulsion de corps (210b) de l'ensemble de propulsion de corps (200) étant agencée pour fournir une force nette le long d'un axe définissant un second vecteur de propulsion de corps (Yb) ; et
le premier vecteur de propulsion de corps (Ya) n'est pas parallèle au second vecteur de propulsion de corps (Yb).

10. Système (300) selon la revendication 8 ou 9, dans lequel les premier et second vecteurs de propulsion de corps (Ya, Yb) sont dirigés à part d'un angle
d'au moins 10° ; et/ou
ne dépassant pas 30°.

11. Système (300) selon une quelconque revendication précédente, dans lequel les ensembles de propulsion (100, 200) comprennent des turbines et/ou des ventilateurs électriques canalisés.

12. Système (300) selon une quelconque revendication précédente, dans lequel :
les ensembles de propulsion à gauche et à droite (100) sont agencés pour fournir une poussée combinée maximale d'au moins 800 N et/ou
l'ensemble de propulsion de corps (200) est agencé pour fournir une poussée maximale d'au moins 400 N.

13. Système (300) selon une quelconque revendication précédente, comprenant en outre une vessie gonflable (310) pour stocker du carburant en communication avec au moins un des ensembles de propulsion (100, 210) par l'intermédiaire d'une conduite d'alimentation en carburant.

14. Système (300) selon la revendication 13, comprenant en outre un capteur de bulles pour détecter la présence de bulles dans la conduite d'alimentation en carburant pour alerter l'utilisateur de la présence de bulles.

15. Système (300) selon une quelconque revendication précédente, dans lequel les ensembles de propulsion à gauche et à droite (100) peuvent se déplacer librement l'un par rapport à l'autre.
